Europäisches Patentamt

(19) European Patent Office

Office européen des brevets

(11) Veröffentlichungsnummer: **0 003 590**
**B1**

(12) EUROPÄISCHE PATENTSCHRIFT

(45) Veröffentlichungstag der Patentschrift: 11.05.83

(51) Int. Cl.³: **B 23 K 9/08**

(21) Anmeldenummer: 79100343.7

(22) Anmeldetag: 06.02.79

(54) **Vorrichtung zum Schweissen metallischer Hohlkörper mit einem längs der in sich geschlossenen Schweisskantennahtbahn magnetisch bewegten Lichtbogen.**

(30) Priorität: 10.02.78 DE 2805562

(43) Veröffentlichungstag der Anmeldung:
22.08.79 Patentblatt 79/17

(45) Bekanntmachung des Hinweises auf die Patenterteilung:
11.05.83 Patentblatt 83/19

(84) Benannte Vertragsstaaten:
BE DE FR GB IT NL SE

(56) Entgegenhaltungen:
DD - A - 102 323
DE - A - 2 015 570
DE - A - 2 258 417
DE - B - 1 253 839
DE - U - 1 841 989
US - A - 3 882 299

(73) Patentinhaber: KUKA Schweissanlagen & Roboter GmbH
Zugspitzstrasse 140
D-8900 Augsburg (DE)

(72) Erfinder: Altstetter, Manfred
Amselweg 12
D-8901 Wulfertshausen (DE)
Erfinder: Pache, Norbert
Zusmarshauser Weg 7a
D-8900 Augsburg (DE)
Erfinder: Mazac, Karel, Dipl.-Ing.
Nebelhornstrasse 2
D-8900 Augsburg (DE)

(74) Vertreter: Ernicke, Hans-Dieter, Dipl.-Ing.
Schwibbogenplatz 2b
D-8900 Augsburg (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zum Schweißen metallischer Hohlkörper mit einem längs der in sich geschlossenen Schweißkantennahtbahn magnetisch bewegten Lichtbogen

Die Erfindung bezieht sich auf eine Vorrichtung zum Schweißen metallischer Hohlkörper (1, 2) mit einem längs der geschlossenen Schweißkantennahtbahn magnetisch bewegten Lichtbogen, bei der das Magnetfild von einem im Innenraum zwischen beiden mit Distanz voneinander festgespannten Hohlkörpern (1, 2) angeordneten, den Abmessungen und der Form der Schweißkantennahtbahn angepaßten, magnetisierbaren Polschuh (13) gebildet ist, an den sich ein mit einer Magnetwicklung (12) versehener Grundkörper (11) zur Bildung einer Magnetspule anschließt.

Eine Vorrichtung mit diesen Merkmalen ist aus der DD—A—102 323 bekannt geworden. Diese befaßt sich mit dem Lichtbogen-Verschweißen von zwei zueinander koaxial und mit Abstand voneinander angeordneten Rohren gleichen Durchmessers. Das eine Rohr wird von einer Innenspule unter Wahrung eines großen radialen Abstandes durchsetzt. Am freien Ende des die Erregerwicklung tragenden Schenkels ist entlang der Nahtlinie zwischen den beiden Rohren ein Polschuh angeordnet, der ebenfalls eine erhebliche (radiale Distanz zur Schweißkantennahtbahn aufweist. Dieser radiale Abstand ist erforderlich, weil das von der Spule durchsetzte Rohr über ein ferromagnetisches Kopplungsstück mit dem Spulenschenkel verbunden ist. Es ergibt sich folglich ein magnetisches Feld, das längs des Schenkels durch den Polschuh in den Spalt zwischen den beiden Rohren eintritt und durch das eine Rohr über das ferromagnetische Kopplungsstück wieder zum Schenkel verläuft.

Daraus ergeben sich erhebliche Probleme hinsichtlich der raschen Festspannung der Werkstücke und im Hinblick auf die Konstruktion des Magnetfeldes am gewünschten Ort, nämlich an der Schweißkantennahtbahn.

Um diese Probleme zu beseitigen, wird mit der DE—A—22 58 417 gelehrt, sowohl einen inneren als auch einen äußeren Polschuh bis nahe an die Schweißkantennahtbahn heranzuführen. Eine solche Anordnungweist jedoch einen komplizierten Aufbau auf und behindert in erheblichem Maß das rasche Aufspannen und Entfernen der zu schweißenden Werkstücke.

Einen anderen Weg offenbart die DE—U—18 41 989, wonach ein Rohr in einen Flansch eingeschweißt werden soll. Hierzu bedient man sich einer koaxial zum Rohr mit Abstand angeordneten rohrförmigen und nicht abschmelzenden Kupfer-Elektrode, in deren Innenraum die magnetische Spule angeordnet ist, deren Wicklung jedoch weitab von der Schweißstelle entfernt sein soll. Mit einer solchen Anordnung lassen sich jedoch nicht koaxial zueinander und mit Abstand voneinander angeordnete Werkstücke nach dem Prinzip des magnetisch bewegten Lichtbogens verschweißen.

Aufgabe der Erfindung ist es daher, koaxial zueinander und voneinander distanzierte Werkstücke mit magnetisch bewegtem Lichtbogen zu schweißen, ohne daß nicht abschmelzende Elektroden oder beidseits der Schweißkantennahtbahn befindliche Polschuhe verwendet werden, wobei aber auch nicht eines der Werkstücke mit einem ferromagnetischen Kopplungsstück verbunden bzw. festgespannt werden soll. Ausgehend von der DD—A—102 323 besteht die erfindungsgemäße Lösung der Aufgabe darin, daß der Polschuh bis nahe an die Schweißkantennahtbahn herangeführt ist und an einen im Durchmesser wesentlich verjüngten Grundkörper anschließt, dessen Magnetwicklung vom Polschuh begrenzt wird und daß der Grunkörper mit dem Polschuh eine Bohrung eines nicht magnetisierbaren, den einen Hohlkörper führenden Zentrierelementes durchsetzt, wobei die in üblicherweise ausgebildeten Spannelemente von außen her die Hohlkörper erfassen.

Die Erfindung sowie die aus den Unteransprüchen ersichtlichen Ausgestaltunger erlauben es, eines von zwei miteinander zu verschweißenden und koaxial zueinander angeordneten Werkstücken an einem nicht magnetisierbaren Zentrierelement zu fixieren, weshalb die dieses Zentrierelement durchsetzende Spule bis an den inneren Polschuh herengeführt und dieser Polschuh bis nahe an die Schweißkantennahtbahn gelegt werden kann, ohne daß unerwünschte Ablenkungen des magnetischen Feldes befürchtet werden müssen.

Einzelheiten der Erfindung werden in der Zeichnung schematisch und beispielsweise dargestellt. Es zeigen:

Fig. 1: einen Längsschnitt durch zwei miteinander zu verschweißende Werkstücke,

Fig. 2: einen Längsschnitt durch eine vorbekannte Anordnung zum Verschweißen solcher Werkstücke und

Fig. 3: einen Lüngsschnitt durch eine erfindungsgemäße Vorrichtung zum Verschweißen der in Fig. 1 dargestllten Werkstücke.

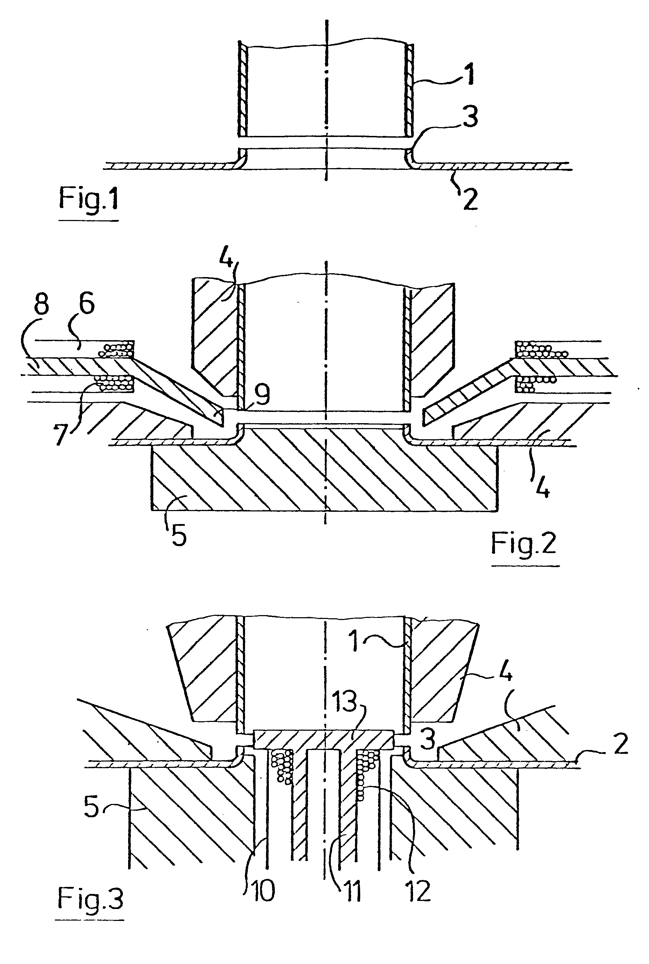

Gemäß der Darstellung nach Fig. 1 soll ein Rohrstück 1 mit einem ausgedehnten Flachteil 2 verschweißt werden. In diesem Flachteil sei ein dem Durchmesser des Rohrstückes entsprechendes Loch ausgestanzt, und zwar derart, daß ein niedriger Kragen 3 stehenbleibt. Zwischen diesem Kragen und dem Rohrstück wird also der Lichtbogen gezogen und radial herumgeführt.

Gemäß der bisherigen auf dem magnetisch bewegten Lichtbogen basierenden Schweißtechnik wurden, wie in Fig. 2 dargestellt, die zu verschweißenden Werkstücke mittels Spannelementen auf einer Schweißmaschine festgespannt und zwar bei gleichzeitigem Ausrichten und Zentrieren der Werkstücke. Diese Spannelemente sind mit der Bezugszahl 4, das Zentrierelement mit der Bezugszahl 5 belegt.

Auf Grund der specifischen Ausbildung der zu verschweißenden Werkstücke ist nun auch eine spezifisch ausgebildete und damit teure Magnetausbildung notwendig. Ein Magnet 6 besteht wie dargestellt aus einem ferromagnetischen Grundkörper 8, der mit einer aus leitendem Material, insbesondere Kupfer bestehenden Wicklung 7 umgeben ist. Deren Wicklungssinn ist gemäß der Lehre nach dem Patent DE—A—23 21 070 so, daß das der Schweißnahtbahn gegenüberliegende Ende des Magneten 6 ein magnetischer Südpol ist.

Infolge des niedrigen Kragens 3 des Flachteils muß, um ein hinreichend starkes Magnetfeld für die Lichtbogenbewegung zur Verfügung zu haben, der Magnet-Grundkörper 8 zur Schweißkantennahtbahn hin verlängert werden und zwar—wie dargestellt—gegenüber der Magnetebene abgewinkelt. Mit diesem an die Schweißnaht reichenden Finger 9 wird somit die magnetische Kraft auf den Lichtbogen übertragen.

Es dürfte ohne weiteres einsichtig sein, daß derart speziell gestaltete Magnete jeweils auch nur für den speziellen Fall anwendbar und somit letztlich kostspielig sind. Auch die Spannelemente sind jeweils dem aktuellen Anwendungsfall entsprechend zu gestalten bzw. nachzuarbeiten.

Eine wesentliche Verbesserung bringt diesbezüglich die erfindungsgemäße Konzeption nach Fig. 3, wobei explizit darauf hingewiesen wird, daß diese Konzeption nur für zu verschweißende Hohlkörper anwendbar ist.

Der Grundaufbau bezüglich Spannelemente 4 und Zentrierung 5 ist der gleiche wie der von Fig. 2. Während nunmehr Spannelement 4 allgemeinster Art verwendbar sind, ist im Gegensatz zur Vorrichtung nach Fig. 2 das Zentrierelement 5 zentrisch so weit aufgebohrt, daß gerade ein Steg zur Zentrierung des Flachteils 2 stehenbleibt.

Erfindungsgemäß ist nun in dieser Bohrung 10 des Zentrierelements 5 eine aus einem magnetisierbaren Grundkörper 11 und einer aufgewickelten (Kupfer-) Leitung 12 bestehende Magnetspule eingeführt und zwar derart, daß der Anfang dieser Magnetspule etwa in Höhe der Schweißnaht zu liegen kommt. Auf dieses Ende ist nun ein Polschuh 13 ebenfalls magnetisierbarem Werkstoff aufgesetzt.

Der erfindungsgemäßen Lehre zufolge ist dieser Polschuh 13 so dimensioniert, daß sein Außendurchmesser bis nahe an die Schweißnaht, d.h. an den Innendurchmesser des zu verschweißenden Rohrs 1 heranreicht. Über diesen Polschuh wird somit bei aktivierter Magnetspule das Magnetische Feld an die Schweißnaht heran- und auf den Lichtbogen zur Einwirkung gebracht.

Um ein Überspringen des Lichtbogens zum Polschuh und damit Fehlschweißungen zu vermeiden, empfiehlt es sich, den Polschuh in der der Schweißnaht gegenüberliegenden Randzone mit einem Isoliermaterial zu überziehen.

Die wesentliche in der vorhergehend beschriebenen Erfindung steckende Verbesserung der bisherigen auf dem magnetisch bewegten Lichtbogen beruhende Schweißtechnik betrifft die Konzeption der im Inneren der zu verschweißenden Hohlkörper untergebrachten Magnetspule mit dem aufgestzten Polschuh. Damit ist es möglich, alleine durch Austausch des Polschuhs verschiedene Durchmesser und Formen zu schweißen, ohne daß der Ausbildung der Magnete und Spannelemente und der Befestigung der Werkstücke besonderes Augenmerk gewidmet werden muß.

Weitere Vorteile der erfindungsgemäßen Innenmagnetspule sind

a) günstigere Herstellungskosten,
b) bessere Kühlmöglichkeiten,
c) stärkeres Magnetfeld bei gleicher Stromstärke.

Darüber hinaus kann der Spulenaußenkörper in vorteilhafter Weise und bei entsprechender Ausgestaltung gleichzeitig als Zentrierelement für die zu verschweißenden Werkstücke benutzt werden.

Ein besonderer Vorteil der erfindungsgemäßen Innenspule liegt noch darin, daß auch eng beieinanderliegende Bauteile verschweißt werden können.

## Patentansprüche

1. Vorrichtung zum Schweißen metallischer Hohlkörper (1, 2) mit einem längs der in sich geschlossenen Schweißkantennahtbahn magnetisch bewegten Lichtbogen, bei der das Magnetfeld von einem im Innenraum zwischen beiden mit Distanz voneinander festgespannten Hohlkörpern (1, 2) angeordneten, den Abmessungen und der Form der Schweißkantennahtbahn angepaßten, magnetisierbaren Polschuh (13) gebildet ist, an den sich ein mit einer Magnetwicklung (12) versehener Grundkörper (11) zur Bildung einer Magnetspule anschließt, dadurch gekennzeichnet, daß der Polschuh (13) bis nahe an die Schweißkantennahtbahn herangeführt ist und an den im Durchmesser wesentlich verjüngten Grundkörper (11) anschließt, dessen Magnetwicklung vom Polschuh (13) begrenzt wird, und daß der Grundkörper (11) mit dem Polschuh (13) eine Bohrung (10) eines nicht magnetisierbaren, den einen Hohlkörper (2) führenden Zentrierelementes (5) durchsetzt, wobei die in üblicherweise ausgebildeten Spannelemente (4) von außen her die Hohlkörper (1, 2) erfassen.

2. Vorrichtung nach Anspruch 1, dadurch gekennzeichnet, daß das Zentrierelement (5) einen von der Bohrungswandung gebildeten Zentriersteg für die Führung eines mit einem kragenartigen Bohrungsrand (3) versehenen flachen Hohlkörpers (2) aufweist.

3. Vorrichtung nach Anspruch 1, dadurch gekennzeichnet, daß der Polschuh (13) am Grundkörper (11) auswechselbar angeordnet ist.

## Revendications

1. Installation pour souder des corps (1, 2) creux métalliques par un arc électrique déplacé magnétiquement le long du trajet fermé de la soudure des bords à souder, dans laquelle le champ magnétique est formé par une pièce (13) polaire magnétisable, interposée dans l'espace intérieur compris entre deux corps (1, 2) creux bloqués à distance l'un de l'autre, adaptée aux dimensions et à la forme du trajet de la soudure des bords à souder et à laquelle se raccorde un corps (11) de base muni d'un enroulement (12) d'électro-aimant pour la formation d'une bobine d'électro-aimant, caractérisée en ce que la pièce (13) polaire est approchée jusqu'à proximité du trajet de la soudure des bords à souder et se raccorde au corps (11) de base, qui a un diamètre nettement réduit et dont l'enroulement (12) d'électro-aimant est délimité par la pièce (13) polaire, et le corps (11) de base passe avec la pièce (13) polaire dans un perçage (10) d'un élément (5) de centrage non magnétisable, guidant l'un (2) des corps creux, les éléments (4) de blocage agencés de manière habituelle prenant les corps (1, 2) creux de l'extérieur.

2. Installation suivant la revendication 1, caractérisée en ce que l'élément (5) de centrage présente une nervure de centrage formée par la paroi du trou et destinée au guidage d'un corps (2) creux plat, muni d'un bord (3) de perçage de type à collet.

3. Installation suivant la revendication 1, caractérisée en ce que le pièce (13) polaire est montée sur le corps (11) de base de manière à pouvoir être échangée.

## Claims

1. Device for welding metallic hollow bodies (1, 2) with an arc magnetically moved along the closed welding edge seam path, in which the magnetic field is formed by a magnetisable pole shoe (13) arranged in the space between the hollow bodies (1, 2) clamped apart, and adapted to the dimensions and shape of the welding edge seam path, and in which the said shoe joins a base (11) provided with a magnet winding (12) to form a magnetic coil, characterised in that the pole shoe (13) is brought up close to the welding edge seam path and joins the base (11) of substantially tapering diameter, whose magnet winding is bordered by the pole shoe (13), and in that the base (11) together with the pole shoe (13) passes through the bore (10) of a non-magnetisable centering element (5) guiding the hollow body (2), wherein the conventionally designed clamping means (4) grasp the hollow bodies (1, 2) externally.

2. Device according to claim 1, characterised in that the centreing element (5) has a centreing stem formed by the bore wall for guiding a flat hollow body (2) provided with a collar-shaped bore edge (3).

3. Device according to claim 1, characterised in that the pole shoe (13) is replaceably arranged on the pole shoe (13).

Fig.1

Fig.2

Fig.3